# EUROPEAN PATENT APPLICATION

(11) **EP 3 166 115 A1**
(43) Date of publication of application: **10.05.2017**
(21) Application number: 16197819.2
(22) Date of filing: 08.11.2016
(51) Int. Cl.: H01B 3/00

(54) **ISOLATION STRUCTURES FOR ELECTRICAL SYSTEMS**

(30) Priority: 09.11.2015 US 201514936605
(71) Applicant: Hamilton Sundstrand Corporation, Charlotte, NC 28217 (US)
(72) Inventor: SHERMAN, William D., Kingston, IL Illinois 60145 (US); HUSS, John, Roscoe, IL Illinois 61073 (US); KASNER, Alan, Long Grove, IL Illinois 60047 (US)
(74) Representative: Hague, Alison Jane

(57) **Abstract**

A nanocomposite structure (14) includes a nanocomposite (100). The nanocomposite (100) includes a bulk matrix phase (102) and a nanophase filler (104) disposed within the bulk matrix phase. The nanophase has a plurality of nanotubes (106) including a material with thermal conductivity that is greater than the thermal conductivity of the bulk matrix phase (102) of the nanocomposite. An electrical device (10) includes a conductor (16) in thermal communication with the nanocomposite structure (14) formed from the nanocomposite (100).

## Description

### BACKGROUND OF THE INVENTION

### 1. Field of the Invention

The present disclosure relates to electrical systems, and more particularly to structures for electrically isolating energized and non-energized structures in electrical systems.

### 2. Description of Related Art

Aircraft electrical systems commonly include isolation that electrically insulates energized structures from non-energized structures. The isolation generally includes materials with a dielectric constant and thermal conductivity suitable for dissipating heat generated by energized structures. The low dielectric constant of the material typically enables the isolation to electrically insulate the energized structure from surrounding de-energized structures. The thermal conductivity of the material is typically such that, when power is applied to an energized structure, heat generated by the energized structure readily dissipates to the surrounding environment. Examples of materials used for electrical isolation include plastics materials, which typically include a polymeric material doped with a material to enhance the thermal conductivity of the material without impairing the resistivity of the polymeric material. The dopants disposed within the polymeric material can influence certain physical properties of the material, typically according to the amount of dopant incorporated in the polymeric material. For example, increasing the amount of dopant to improve thermal conductivity can reduce the material strength of some materials and/or render the material more dense than materials with lower amounts of dopant.

Such conventional systems and methods have generally been considered satisfactory for their intended purpose. However, there is still a need in the art for improved materials for isolation structures. The present disclosure provides a solution for this need.

### SUMMARY OF THE INVENTION

A nanocomposite structure includes a nanocomposite. The nanocomposite includes a bulk matrix phase and a nanophase filler distributed within the bulk matrix phase. The nanophase filler includes a plurality of nanotubes with a material having thermal conductivity that is greater than the thermal conductivity of the bulk matrix phase of the nanocomposite.

In certain embodiments, the material forming the nanotubes can have a resistivity that is equal to or greater than the resistivity of the bulk matrix phase. The bulk matrix phase of the nanocomposite can be an insulator. The nanophase filler can be an insulator. The nanocomposite can be an insulator. The nanotubes of the nanophase filler can include boron nitride, and in an exemplary embodiment are substantially entirely formed from boron nitride. The bulk matrix phase can include one or more of a polymeric material, a resin, or an adhesive. The nanocomposite can be thermally anisotropic. The nanocomposite can have anisotropic material strength, such as yield strength, compressive strength, tensile strength, fatigue strength, and/or impact strength by way of non-limiting example.

In accordance with certain embodiments, the nanotubes can have lengths and widths where the length is greater than the width of the nanotube. The length can be substantially greater than the width of the nanotube, e.g., the width of a given nanotube being greater than ten (10) times the width of the nanotube. Widths of the nanotubes can be submicron; lengths of the nanotubes can be micron-size or greater. Two or more of the nanotubes can be in contact with one another within the bulk matrix phase. Two or more of the nanotubes can intermesh with one another within the bulk matrix phase. The intermeshed nanotubes can form a fibrous body within the nanocomposite, heat transfer and/or the material strength of the nanocomposite being anisotropic.

It is also contemplated that, in accordance with certain embodiments, the nanocomposite can have thermal conductivity that is greater than the thermal conductivity of a composite having an equivalent volume fraction of filler material with the same composition as the nanophase, in a particulate form, and disposed within the bulk matrix phase. The nanocomposite can have strength that is greater than the strength of a composite with an equivalent volume fraction of filler material of the same composition as the nanophase, in a particulate form, and disposed within the bulk matrix phase. The nanocomposite can have thermal conductivity that is equivalent to the thermal conductivity of a composite with a greater volume fraction of a filler material with the same composition as the nanophase, in a particulate form, and disposed within the bulk matrix phase. It is further contemplated that, for a given density, the nanocomposite can have a greater thermal conductivity and/or material strength than a composite with an equivalent volume fraction of filler material of the same composition as the nanophase, in a particulate form, and disposed within the bulk matrix phase.

An electrical device includes a structure as described above and a conductor in thermal communication with the structure. The structure is configured and adapted to transfer heat generated by resistive heating of the conductor to the environment external to the electrical device. In certain embodiments the conductor can includes a wire, a cable, a coil, or a winding. The accordance with certain embodiments, the structure can be a housing or a moveable element of a contactor or breaker assembly. It is also contemplated that the structure can be in intimate mechanical contact with the conductor, such as a sheath for a wire or a cable.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-sectional view of an exemplary embodiment of an electrical device constructed in accordance with the present disclosure, showing a conductor and a nanocomposite;
Fig. 2 is a schematic view of a nanotube of the nanocomposite of Fig. 1, showing the shape of the nanotube;
Fig. 3 is a schematic view of the nanocomposite of Fig. 1, showing nanotubes of the nanophase filler of the nanocomposite in contact and intermeshed with one another;
Fig. 4 is a schematic view of a composite formed from the bulk matrix phase of the nanocomposite of Fig. 1 and a filler in particulate form;
Fig. 5 is a chart of material strength versus filler volume fraction, showing the material strength of the nanocomposite of Fig. 1 relative to the composite of Fig. 4; and
Fig. 6 is a chart of thermal conductivity versus filler volume fraction, showing the thermal conductivity of the nanocomposite of Fig. 1 relative to the composite of Fig. 4.

### DETAILED DESCRIPTION OF THE PREFERRED EMBODIMENTS

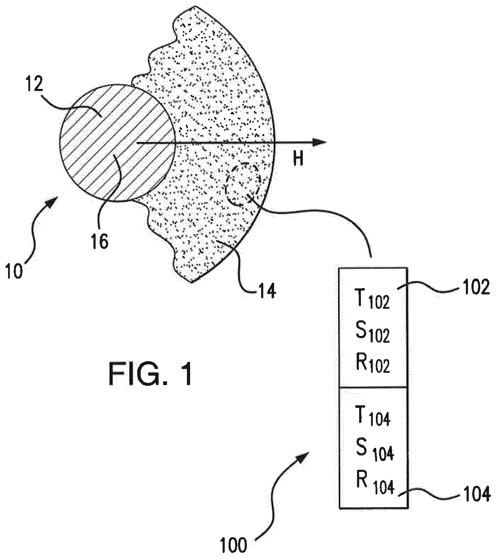

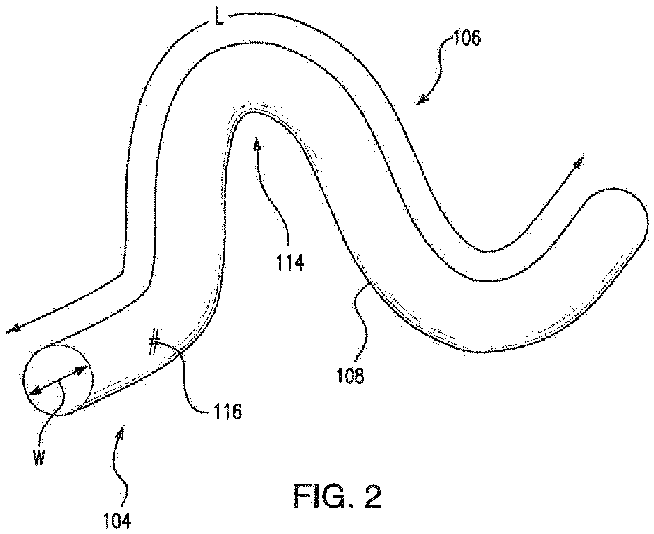

Reference will now be made to the drawings wherein like reference numerals identify similar structural features or aspects of the subject disclosure. For purposes of explanation and illustration, and not limitation, a partial view of an exemplary embodiment of an electrical device with a nanocomposite structure in accordance with the disclosure is shown in Fig. 1, and is designated generally by reference character 10. Other embodiments of nanocomposite structures in accordance with the disclosure, or aspects thereof, are provided in Figs. 2 - 6, as will be described. The systems and methods described herein can be used for electrical isolation structures, such as in housings, breakers, contactors, and wire or cable sheaths in aircraft electrical systems.

Referring now to Fig. 1, electrical device 10 is shown. Electrical device 10 includes a conductor 12 and a nanocomposite structure 14. Conductor 12 includes an electrical conductive material 16, like copper, and is in intimate mechanical contact with nanocomposite structure 14. Nanocomposite structure 14 includes a nanocomposite 100 that electrically isolates conductor 12 from the environment external to electrical device 10 and allows heat H, such as heat generated from resistive heating of conductor 12 from current flowing therethrough, to dissipate the environment external to electrical device 10 through nanocomposite structure 14. Nanocomposite 100 can be an electrical insulator. In the illustrated exemplary embodiment conductor 12 is in intimate mechanical contact with nanocomposite structure 14 to facilitate heat dissipation from conductor 12. Conductor 12 may be a wire, a cable, a coil, and a winding for an electrical component of an aircraft electrical system. Nanocomposite structure 14 may be a housing, a sheath for a wire or cable, or a movable element for a breaker or a contactor in an electrical component of an aircraft electrical system.

Nanocomposite 100 includes a bulk matrix phase 102 and a nanophase filler 104. Bulk matrix phase 102 can be an insulator and includes one or more of a polymeric material, a resin material, and/or an adhesive material with predetermined physical properties including a thermal conductivity T₁₀₂, a material strength S₁₀₂, and an electrical resistivity R₁₀₂. Nanophase filler 104 can be an electrical insulator. In embodiments, nanophase filler 104 has an electrical resistance that is greater than 10¹² Ωcm. In certain embodiments, nanophase filler 104 has an electrical resistance that is greater than 10¹⁴ Ωcm.

Nanophase filler 104 has predetermined physical properties including a thermal conductivity T₁₀₄, a material strength S₁₀₄, and an electrical resistivity R₁₀₄. In embodiments, resistivity R₁₀₄ of nanophase filler 104 can be equal to or greater than the resistivity R₁₀₂ of bulk matrix phase 102. In certain embodiments, thermal conductivity T₁₀₄ of nanophase filler 104 is greater than the thermal conductivity T₁₀₂ of bulk matrix phase 102. In accordance with certain embodiments, material strength of S₁₀₄ of nanophase filler 104 is greater than material strength S₁₀₂ of bulk matrix phase 102. In this respect one or more of the yield strength, compressive strength, tensile strength, fatigue strength, and/or impact strength of nanophase filler 104 may be greater than that of bulk matrix phase 102.

With reference to Fig. 2, a nanotube 106 of nanophase filler 104 is shown. Nanotube 106 has a tubular body 108 with a serpentine shape 112 and including one or more arcuate segments 114. Tubular body 108 defines a width W and a length L extending between opposite ends of tubular body 108. Length L is greater than width W. In embodiments length L is greater than a micron and width W is smaller than one micron in size. In certain embodiments length L of nanotube 106 is substantially greater than width W, e.g., length L being more than ten (10) times the size of width W. In accordance with certain embodiments, nanotube 106 includes a boron nitride composition 116. As will be appreciated by those of skill in the art in view of the present disclosure, incorporation of boron nitride in nanocomposite structures can increase the thermal conductivity of the structure without reducing the resistivity and electrical isolation provided by the nanocomposite structure.

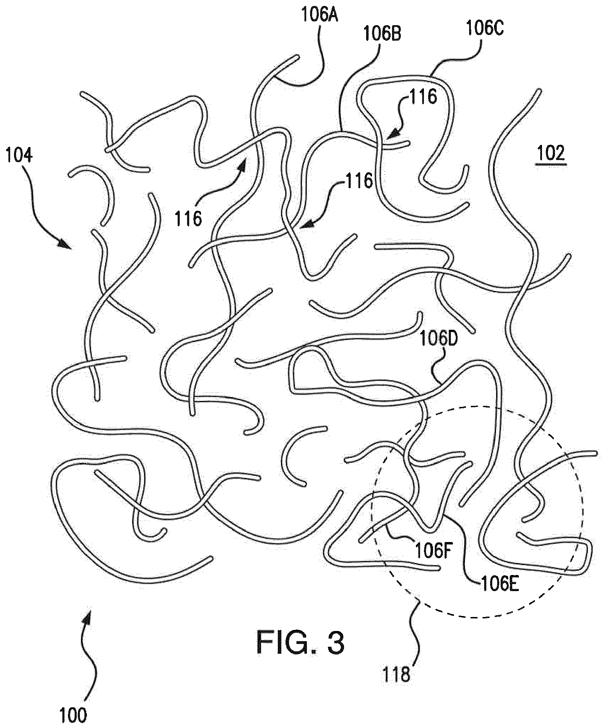

With reference to Fig. 3, a plurality of nanotubes 106 of nanophase filler 104 are shown. Nanophase filler 104 includes a plurality of nanotubes 106A-106C that are in contact with one another at contact locations 116. Contact between nanotubes 106A-106C at contact locations 116 enables heat H (shown in Fig. 1) to transfer through nanotubes 106A-106C serially, and without the need for the heat to cross an intervening gap defined between nanotubes 106A-106C by bulk matrix phase 102. As will be appreciated by those of skill in the art in view of the present disclosure, serial heat transfer between contacting nanotubes improves heat transfer through a nanocomposite when heat transfers more rapidly through the nanotubes than the surrounding bulk matrix phase.

Nanophase filler 104 also includes a plurality of nanotubes 106D-106F that intermesh with one another. Intermeshing of nanotubes 106D-106F cause force applied to one of intermeshed nanotubes 106D-106F to transfer through the intermeshed nanotubes to the other intermeshed nanotubes. In this respect a force F applied to nanotube 106D exerts associated force components on nanotube 106E and nanotube 106F, distributing force exerted on one of the nanotubes across the other intermeshed nanotubes. The distribution of the force reduces the peak stress exerted locally on nanocomposite 100, enabling nanocomposite 100 to withstand greater force than would otherwise be possible. As will also be appreciated by those of skill in the art in view of the present disclosure, intermeshed nanotubes 106D-106F provide heat transfer benefits similar to those of contacting nanotubes 106A-106C.

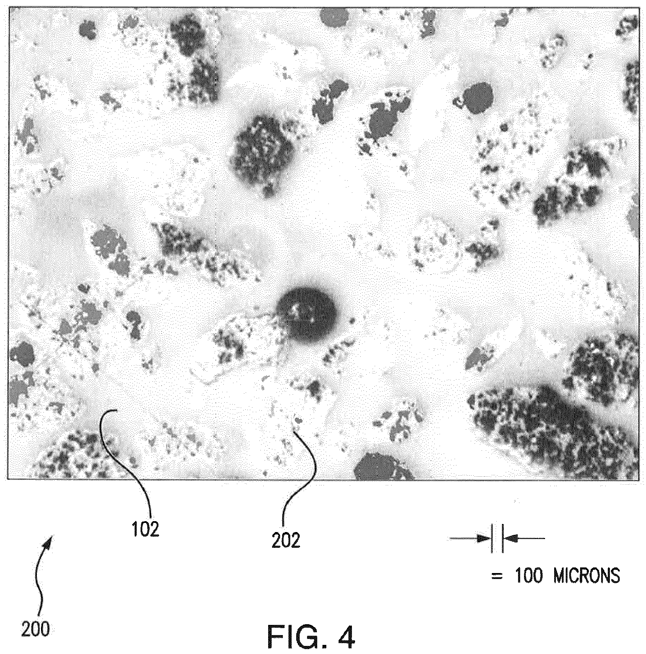

Intermeshed nanotubes 106D-106F form a fibrous body 118 disposed within bulk matrix phase 102. Fibrous body 118 supports bulk matrix phase 102, reinforcing bulk matrix phase 102. In the illustrated exemplary embodiment the contacting nanotubes, e.g., nanotubes 106A-106C, and the intermeshed nanotubes, e.g., nanotubes 106D-106F, are well distributed within nanocomposite structure. As used herein, well distributed means that the dispersal of the volume fraction of nanotubes incorporated within the bulk matrix phase is such that the cooperative effects of thermal conductivity and/or material strength are realized, but density of the composite is less than that of a composite having similar or equivalent heat transfer and/or material strength properties and incorporating a filler material of the same composition in particulate form. In this respect Fig. 4 shows a composite 200 with boron nitride particles 202 incorporated in bulk matrix phase 102.

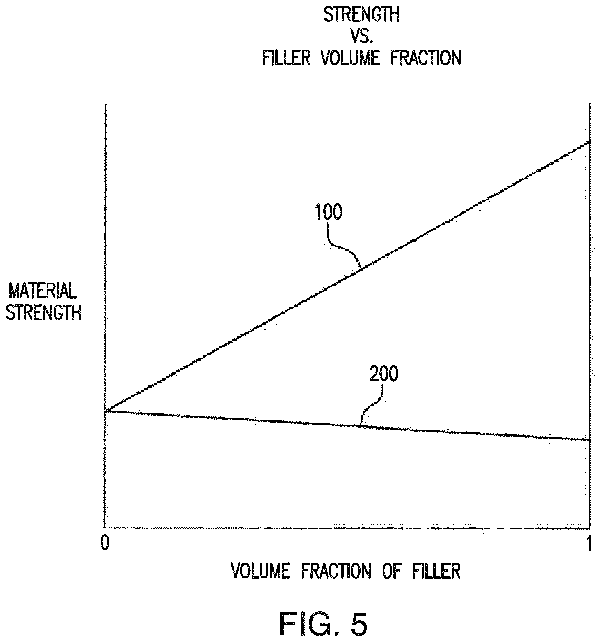

With reference to Fig. 5, a chart of material strength versus filler volume fraction is shown for nanocomposite 100 (shown in Fig. 1) and composite 200 (shown in Fig. 4). As indicated by the respective traces associated with the material strength of nanocomposite 100 and composite 200, for a given filler volume fraction of a common filler composition, nanocomposite 100 provides superior material strength relative to composite 200. Notably, increasing volume fractions of nanophase filler 104 (shown in Fig. 1) increase the material strength of nanocomposite 100. In comparison, increasing volume fractions of the filler composition in particle form tend to decrease the material strength of composite 200.

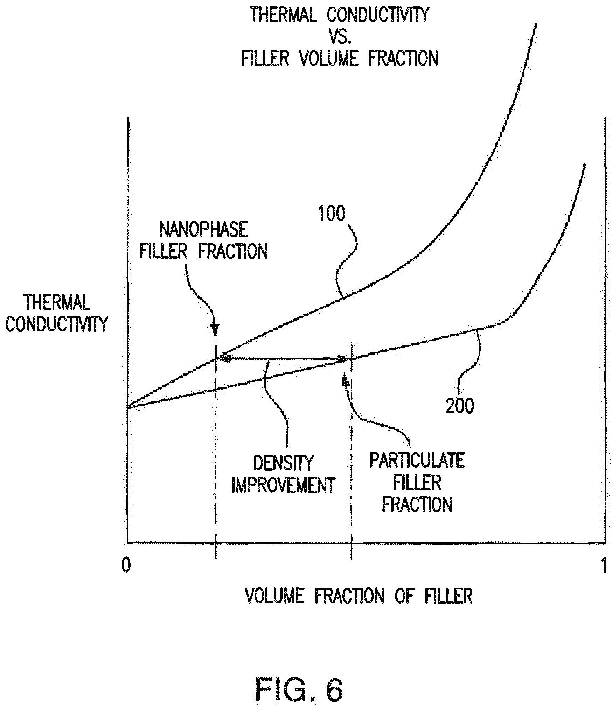

With reference to Fig. 6, a chart of thermal conductivity versus filler volume fraction is shown for nanocomposite 100 (shown in Fig. 1) and composite 200 (shown in Fig. 4). As indicated by the respective traces associated with the thermal conductivities of nanocomposite 100 and composite 200, for a given volume fraction of filler composition, nanocomposite 100 provides superior thermal conductivity in comparison to composite 200. Notably, increasing volume fractions of nanophase 104 (shown in Fig. 4) realize greater thermal conductivities than equivalent volume fractions of the composition in particulate form. This enables nanocomposite structures formed from nanocomposite 100 to provide the same thermal conductivity as composite structures formed from composite 200 with a lower volume fraction of filler. In embodiments where the filler composition is more dense than the bulk matrix phase, this reduces the density (and weight) of the resulting structure.

In embodiments described herein, nanocomposites include nanophase fillers with compositions having a greater thermal conductivity than the compositions incorporated in the bulk matrix phase of the nanocomposite. The compositions are electrically resistive, and have electrical resistance that is equivalent or greater than the electrical resistance of the composition(s) forming the bulk matrix phase material. This allows structures formed from the nanocomposites to provide electrical isolation with improved thermal conductivity.

In certain embodiments described herein, the nanophase filler includes the composition in nanotube form. The discrete nanotubes contact and/or intermesh with one another within the bulk matrix phase, thereby forming a fibrous body within the bulk matrix body. The contacting and/or intermeshed nanotubes within the bulk nanophase are randomly oriented and well distributed within the bulk nanophase, thereby providing anisotropic thermal conductivity and/or material strength. It is contemplated that the contacting and/or intermeshed nanotubes of the fibrous body provide equivalent or superior thermal conductivity and/or material strength than a composite including the composition of the nanophase in particulate form, thereby providing weight savings through lower relative density.

The methods and systems of the present disclosure, as described above and shown in the drawings, provide for nanocomposites with superior properties including improved thermal conductivity, material strength, and/or reduced density. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A nanocomposite structure (14), comprising:
a nanocomposite (100) including:
a bulk matrix phase (102); and
a nanophase filler (104) disposed in the bulk matrix phase (102), wherein the nanophase filler (104) comprises a plurality of nanotubes (106),
wherein the plurality of nanotubes (104) include a material with a thermal conductivity that is greater than a thermal conductivity of the bulk matrix phase (102).

2. A nanocomposite structure (14) as recited in claim 1, wherein the nanophase filler (104) is an electrical insulator.

3. A nanocomposite structure (14) as recited in claim 1, wherein the nanocomposite (100) is an electrical insulator.

4. A nanocomposite structure (14) as recited in claim 1, 2 or 3, wherein the bulk matrix phase (102) includes one or more of a polymeric material, a resin, and an adhesive.

5. A nanocomposite structure (14) as recited in any preceding claim, wherein the plurality of nanotubes (106) include boron nitride.

6. A nanocomposite structure (14) as recited in any preceding claim, wherein the nanocomposite (100) is thermally anisotropic.

7. A nanocomposite structure (14) as recited in any preceding claim, wherein the plurality of nanotubes (106) are in physical contact within one another.

8. A nanocomposite structure (14) as recited in any preceding claim, wherein the plurality of nanotubes (106) intermesh with one another.

9. A nanocomposite structure (14) as recited in claim 8, wherein the intermeshed nanotubes (106) form a fibrous reinforcing structure.

10. A nanocomposite structure (14) as recited in any preceding claim, wherein one or more of the plurality of nanotubes (106) has a body with a serpentine shape.

11. A nanocomposite structure (14) as recited in any preceding claim, wherein the nanocomposite (100) has a thermal conductivity that is greater than a thermal conductivity of a composite with an equivalent volume fraction of filler in particulate form with the same composition as the nanophase filler (104).

12. A nanocomposite structure (14) as recited in any preceding claim, wherein the nanocomposite (100) has a material strength that is greater than a material strength of a composite with an equivalent volume fraction of filler in particulate form with the same composition as the nanophase filler (104).

13. A nanocomposite structure (14) as recited in any of claims 1 to 10, wherein the nanocomposite (100) has thermal conductivity that equivalent to a thermal conductivity of a composite having a greater volume fraction of filler in particulate form with the same composition as the nanophase filler (104).

14. An electrical device (10), comprising:
a nanocomposite structure (14) as recited in any preceding claim; and
a conductor (12) in thermal communication with the nanocomposite structure (14),
wherein the nanocomposite structure is configured and adapted to transfer heat generated by resistive heating of the conductor (12) to the environment external to the electrical device (10).

15. An electrical device (10) as recited in claim 14, wherein the conductor (12) includes a wire, a cable, a coil, and a winding and/or wherein the nanocomposite structure (14) includes one of a housing, a sheath for a wire or cable, or a movable element for a breaker or a contactor.
